# EUROPEAN PATENT APPLICATION

(11) **EP 1 239 687 A1**
(43) Date of publication of application: **11.09.2002**
(21) Application number: 01105984.7
(22) Date of filing: 10.03.2001
(51) Int. Cl.: H04Q 7/32

(54) **Communication with a plurality of public land mobile communication networks (PLMNs) without roaming agreements**

(71) Applicant: DRIVE-IT SYSTEMS AB, 182 33 Danderyd (SE)
(72) Inventor: Johansson, Jan, 171 55 Solna (SE)
(74) Representative: Lindberg, Klas Valter Bo

(57) **Abstract**

The present invention relates to a method for enabling a mobile unit to communicate with a plurality of Public Land Mobile Networks (PLMN:s). The mobile unit is provided with an emulator arranged to emulate a Subscription Identity (SI) based on a set of International Mobile Subscriber Identity (IMSI) and Key identifier (Ki) provided to the emulator. The method is characterized in making a plurality of IMSI/Ki sets available to the mobile unit, preferably by transmitting said plurality of IMSI/Ki sets provided by a memory deposit to said mobile unit via wireless communication, and automatically changing the emulated SI during on-going communication by selecting an IMSI/Ki set from said plurality of available IMSI/Ki sets, providing said selected IMSI/Ki set to the emulator, and emulating an SI accepted by one of said PLMN:s.
Through the inventive method, the mobile unit can be connected to any given PLMN, simply by providing the suitable IMSI and Ki to the circuitry means, which can then emulate an SI accepted by the desired PLMN.

## Description

### Technical field

The present invention is related to a method and a system for enabling a mobile unit to communicate with a plurality of Public Land Mobile Networks (PLMN:s). The mobile unit is provided with an emulator arranged to emulate a Subscription Identity (SI) based on a set of International Mobile Subscriber Identity (IMSI) and Key identifier (Ki) provided to the emulator.

### Technical background

In available GSM networks, a mobile unit is provided with a Subscription Identity Module (SIM) which identifies the user to the operator network. More specifically, the SIM is arranged to perform a "challenge response" sequence, during which the operator Home Locator Register (HLR) interacts with the SIM in order to determine the true identity of the user.

When a mobile unit is used outside the home operator network (the Home Public Land Mobile Network, HPLMN), i.e. in a Visitor Public Land Mobile Network (VPLMN), a challenge response with the HLR is performed via a Visitor Location Register (VLR), through which the VPLMN is provided with information about the user from the HLR. This enables the VPLMN to provide service to the user, which service is then charged to the HPLMN, later to be billed to the subscriber account. This process of temporarily using an operator network different from the home network is referred to as roaming, and requires that the HPLMN and the VPLMN have entered into a "roaming agreement". Not all operators have roaming agreements, causing problems in certain situations. Several attempts have been made to overcome the need for roaming agreements, one example is described in WO 98/10614.

Another problem with roaming, not related to the agreement requirement, is caused by minor differences between software and hardware in base stations belonging to different network operators, such differences being permitted within the GSM standard. These differences give rise to communication difficulties, especially during GSM data transmissions, but also during SMS transmissions and even (though less frequently) during voice transmission. Regarding GSM data, the problems are often large enough to prevent successful communication in applications where roaming is required. This is an issue for example when making GSM data transmission to a vehicle in motion, typically crossing the borders between different Public Land Mobile Networks.

### Summary of the invention

An object with the present invention is to overcome the above problems, and to enable a mobile unit to communicate with several different PLMN:s without the need for roaming.

This and other objects are accomplished with a method of the kind mentioned by way of introduction, wherein a plurality of IMSI/Ki sets are made available to the mobile unit, and the emulated SI is automatically changed by selecting an IMSI/Ki set from said plurality of available IMSI/Ki sets, providing said selected IMSI/Ki set to the emulator, and emulating an SI accepted by one of said PLMN:s

Through the invention, the mobile unit can be connected to any given PLMN, simply by providing the suitable IMSI and Ki to the circuitry means, which can then emulate an SI accepted by the desired PLMN. Such emulators are per se known in the art (see http://simpic.tele-servizi.com/simpic24.html for an example of implementation) but have only been used to create duplicates of a given SIM. According to the invention, the emulator is used in a much more elaborate fashion, to emulate a large variety of SI:s, depending on the current communication needs.

The method can be compared to having access to a large number of different SIM:s, associated with subscriptions with different operators. The SIM associated with the operator servicing the area currently being visited is inserted into mobile unit, thereby enabling contact with this particular operator. This would of course cause some practical problems, but would effectively eliminate roaming.

The inventive method, however, has several advantages over this more direct SIM switching technique. First of all, the practical problems are eliminated, as all SIM switching is taken care of by the mobile unit and the emulator, completely automatic without the concern of the user. Second, by keeping several physical SIM:s at hand, these SI:s are effectively occupied by one user. According to the inventive method, the SI attributes IMSI and Ki can instead be transferred between units, permitting one SI to be used consecutively by different users. In short, the method according to the present invention provides a highly flexible way of facilitating network changes, thereby also eliminating roaming whereby the quality of communication is improved.

According to a preferred embodiment, the method comprises the step of monitoring which Public Land Mobile Network (PLMN) provides satisfactory communication at the mobile unit's current location, and initiating a change of emulated SI when a change of PLMN is deemed advantageous.

This enables the mobile unit to automatically maintain satisfactory communication with a remote unit, independently of movement in and out of PLMN areas, and also independently of roaming difficulties. Each time the mobile unit detects a need for changing PLMN, the emulator is instructed to emulate a different SI, and connection is made with a different PLMN. The monitoring of PLMN is easily accomplished within e.g. the GSM standard.

Said plurality of IMSI/Ki sets can preferably be made available from a memory deposit via wireless communication. This secures maximum flexibility to the user of the mobile unit, as the SI that is currently needed for satisfactory communication can be downloaded in an instant. The memory deposit may contain a large number of IMSI/Ki sets, and can also be located at convenient locations.

The IMSI/Ki sets can be transferred from a deposit to the mobile unit upon request from the mobile unit, which enables the situation at the mobile unit to determine which IMSI/Ki sets are downloaded and when. The step of providing the selected IMSI/Ki set to the emulator can in this case comprise requesting said IMSI/Ki set directly from the memory deposit.

Another solution is to let the deposit keep track of mobile units participating in the system, and providing the appropriate IMSI/Ki sets at suitable times. In order to facilitate this process, or indeed in other situations, it may be advantageous to temporarily store several IMSI/Ki sets in the mobile unit, enabling selection of one IMSI/Ki set from these several sets

Another aspect of the present invention is a system for mobile communication based on the method. The system comprises at least one memory deposit, in which a plurality of IMSI/Ki sets are stored, and the mobile unit is provided with communication means for contacting said memory deposit and thereby access said IMSI/Ki sets, and processing means for selecting an IMSI/Ki set from said plurality of IMSI/Ki sets and providing said selected IMSI/Ki set to the emulator, for changing the emulated SI.

This system can comprise a limited number of mobile units, for example participating within regulations determined by network operators and the system administrator.

In a possible embodiment, the emulator is arranged on an active SIM, by providing the SIM with program code portions for emulating an SI. This makes the method according to the invention easy to use with any mobile unit adapted for use with active SIM:s. Said processing means can in this case also be implemented as software code portions on the SIM.

### Brief description of the drawings

The currently preferred embodiment of the present invention will now be described in more detail, with reference to the drawings.
Fig 1 illustrates schematically a system for vehicle renting, adapted to communicate using the method according to the invention.
Fig 2 illustrates in more detail a mobile unit in a vehicle in fig 1.

### Detailed description of a preferred embodiment

A conventional SIM is provided on its silicon surface with the attributes IMSI (International Mobile Subscriber Identity), Ki (secret identity key) and an algorithm for performing security checks. The algorithm is called A38 and comprises one part (A3) handling the "Challenge response", i.e. the procedure during which the HLR (Home Location Register) determines the identity of the user, and a second part (A8) handling encryption between the mobile unit and the base station. Normally, an operator provides a SIM manufacturer with a list of IMSI and Ki to be printed on a set of SIM:s when the SIM:s are ordered. Alternatively, the manufacturer keeps track of the IMSI and Ki, and provides a list to the operator at delivery. When a user acquires a SIM, the serial number of the SIM is associated with the IMSI and Ki on the SIM. For more information about IMSI, Ki, A38 and the GSM system, reference is made to "GSM networks: Protocols, terminology and implementation", Gunnar Heine, Artech House Publications, 1998 (ISBN 0-89006-471-7).

Although the present invention herein is described as related to GSM technology (including GPRS and UMTS), this should not be regarded as a limitation. On the contrary, the invention is useful in any type of mobile communication network, including analog networks.

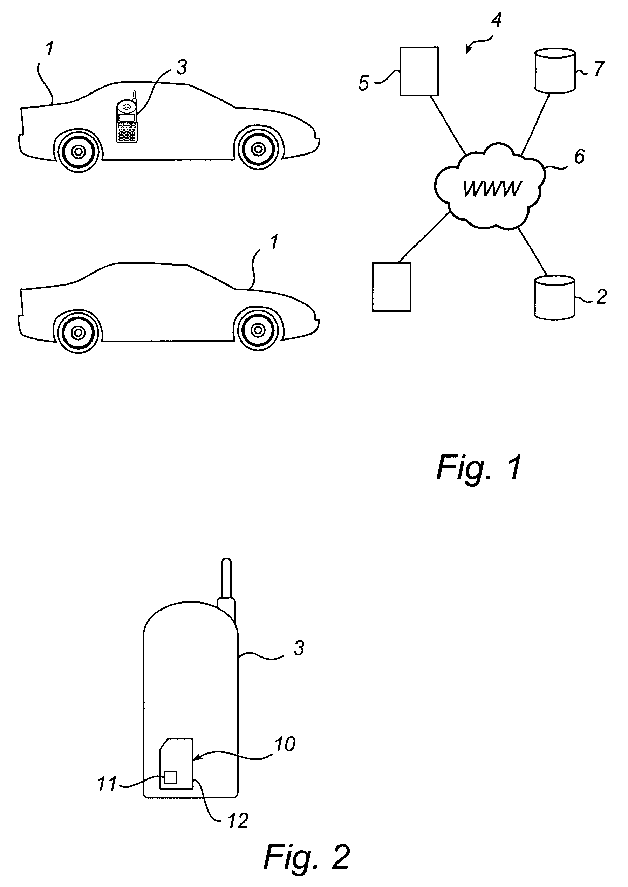

An exemplary implementation of a currently preferred embodiment of the invention is illustrated in fig 1. The system shown is related to renting of vehicles 1, wherein the vehicles in the fleet communicate with a central information server 2, keeping track of the fleet and its users. The communication is performed using GSM-technology, and for this purpose each vehicle is provided with a GSM mobile unit 3 for establishing GSM-data communication with a global vehicle net (GVN) 4 comprising a number of GSM gateways 5, connected to the Internet 6, thereby in contact with the information server 2. Also, the GSM unit 3 in each vehicle is an excellent service for the user, who may access all services provided by through GSM technology during the drive. A GSM mobile unit is here understood to comprise a mobile equipment (the phone itself) and a SIM (Subscriber Identity Module). In a different system, i.e. other than GSM, a mobile unit refers to a unit with the same functionality as a GSM mobile unit. The function of the mobile unit can, to any desired degree, be implemented in software, as is the case in many conventional vehicles today.

Moreover, it is not necessary that the mobile unit includes a telephone functionality. In one system of the described type, the mobile unit is a cellular module (i.e. a GSM modem), enabling GSM data communication between the GVN and the vehicle, but without providing phone service to the vehicle driver.

In a system of this kind, the above mentioned problems with roaming have been present, as the GSM unit has belonged to one home network, and as soon as the user leaves this operator area, roaming will take place, at least during the Challenge Response phase. A user who uses the GSM unit for voice-, SMS- or GSM data transmissions, will during a long drive be charged for a large amount of roaming fees.

In fig 2 is shown in more detail how the GSM unit 3 is provided with an emulator 10. The emulator can be realized in hardware, as an extra circuit in the mobile unit 3, or in software 11, implemented in hardware already present in the mobile unit. In conventional GSM mobile units, the SIM 12 lacks means to actively call upon the mobile equipment. Instead, the mobile equipment reads and writes to the SIM memory, and initiates execution of software routines stored on the SIM (such as the A38 routine). Therefore, even though a SIM emulator of the type described herein can be implemented in conventional SIM as an executable program sequence, this emulator would not be able to actively communicate with the mobile equipment. However, it is envisaged that the mobile equipment can be adapted to support SIM:s with executable code portions making calls to the mobile equipment (active SIM). In this case, the SIM 12 can include software code portions 11 embodying the emulator, as well as the A38 algorithm.

In any case, the emulator software 11 is adapted to emulate any given subscriber identity (SI) based on a set of IMSI and Ki. The principles for this emulation is known per se by the man skilled in the art.

Returning to fig 1, several sets of IMSI/Ki are stored at one or several memory deposits 7, connected to the GVN 4 for example via Internet 6. Alternatively, there can be a memory deposit associated with each GSM gateway 5.

The memory deposits may be independently organized databases with IMSI/Ki sets made available to the system by purchase from network operators. Alternatively, the deposits may be owned and administrated by the telecom network operators, and only lent by the system when needed. This later model will of course be extremely flexible, although the system becomes very dependent upon the network operators.

During use, the mobile unit monitors which PLMN is currently in use (e.g. via the GSM 07.07 ETSI specification). When the unit determines there is a need for change of operator, the emulator 10 is provided with a suitable set of IMSI/Ki, and a new SI is emulated, thereby enabling contact via a new operator, presumably providing better service in the area.

If there is an on-going communication when the mobile unit makes this determination, this communication will have to be terminated, before the emulator can emulate a new SI and then initialize a new communication, with a new HLR. This effect is a limitation of the currently implemented GSM systems, but is not necessarily present in future networks. If this limitation is not present, a switch of SI may be performed during on-going communication.

In the illustrated embodiment, the set of IMSI/Ki can be transferred to the mobile unit 3 from one of the memory deposits 7 via one of the GSM gateways 5, upon request from the mobile unit 3. This request can be sent immediately before a change of operator is made in the mobile unit, i.e. as soon as the need for such a change is realized. However, in some cases it may be advantageous to provide the mobile unit with a number of IMSI/Ki sets in advance, for example corresponding to SI:s for all operators who's networks neighbor the current network. These sets can be stored locally in the memory 13 of the mobile unit, thereby being readily accessible to the emulator 8. Thus, the mobile unit 3 is prepared for a change of operator, if this should be necessary on short notice.

An SI should only be used by one GSM unit at a time, as it corresponds to a specific subscription with a network operator. The memory deposits 7 are therefore arranged to administrate the use of IMSI/Ki sets on a "for rent" basis, only permitting one user to have access to a IMSI/Ki set at a time. When a mobile unit no longer has a need for a particular SI - for example when this particular network no longer is within reach - the corresponding IMSI/Ki can be "returned" to the memory deposit. In practice, such a procedure could be accomplished by simply having a flag set at the memory deposit while a IMSI/Ki set is in use.

If the second model mentioned above is implemented, where a mobile unit is provided with and locally stores several SI:s at a time, a slightly larger number of available SI:s can be expected to be required.

A number of variations to the above described embodiments can of course be realized by the person skilled in the art. For example, several different ways may be used to communicate the various IMSI/Ki sets to the mobile unit, and the principles governing when to change the emulated SI can be adapted and optimized to the present situation.

## Claims

1. Method for enabling a mobile unit to communicate with a plurality of Public Land Mobile Networks (PLMN:s), said mobile unit being provided with an emulator arranged to emulate a Subscription Identity (SI) based on a set of International Mobile Subscriber Identity (IMSI) and Key identifier (Ki) provided to the emulator, **characterized in** automatically changing the emulated SI by selecting an IMSI/Ki set from a plurality of IMSI/Ki sets made available to the mobile unit, providing said selected IMSI/Ki set to the emulator, and emulating an SI accepted by one of said PLMN:s.

2. Method according to claim 1, further comprising the step of monitoring which Public Land Mobile Network (PLMN) provides satisfactory communication at the mobile unit's current location, and initiating a change of emulated SI when a change of PLMN is deemed advantageous.

3. Method according to claim 1 or 2, wherein said plurality of IMSI/Ki sets are made available from a memory deposit via wireless communication.

4. Method according to claim 3, wherein an IMSI/Ki set is transferred to the mobile unit upon request from the mobile unit

5. Method according to claim 4, wherein the step of providing said selected IMSI/Ki set to the emulator comprises requesting said IMSI/Ki set from the memory deposit.

6. Method according to claim 1-4, further comprising the step of temporarily storing several IMSI/Ki sets in the mobile unit, enabling selection of one IMSI/Ki set from these several sets.

7. System for mobile communication enabling a mobile unit to communicate with a plurality of Public Land Mobile Networks (PLMN:s), said mobile unit being provided with an emulator arranged to emulate a Subscription Identity (SI) based on a set of International Mobile Subscriber Identity (IMSI) and Key identifier (Ki) provided to the emulator, **characterized by** at least one memory deposit, in which a plurality of IMSI/Ki sets are stored,
said mobile unit being provided with communication means for contacting said memory deposit and thereby access said IMSI/Ki sets, and processing means for selecting an IMSI/Ki set from said plurality of IMSI/Ki sets and providing said selected IMSI/Ki set to the emulator, for changing the emulated SI.

8. System according to claim 7, wherein said emulator is a Subscriber Identity Module (SIM), provided with software code portions arranged to emulate an SI.

9. System according to claim 8, wherein said processing means comprise software code portions arranged on said SIM.
